# DEMANDE DE BREVET EUROPEEN

(11) **EP 2 862 445 A1**
(43) Date de publication de la demande: **22.04.2015**
(21) Numéro de dépôt: 14306627.2
(22) Date de dépôt: 14.10.2014
(51) Int. Cl.: A22C 7/00, A22C 17/00

(54) **Procédé et installation pour l'obtention de pièces de viande qui présentent des formes et des poids cibles homogènes**

(30) Priorité: 15.10.2013 FR 1360028
(71) Demandeur: Gastronome, 44150 Ancenis (FR)
(72) Inventeur: Pichard, Bérangère, 85590 Treize Vents (FR); Liaigre, Guy, 79250 Nueil Les Aubiers (FR)
(74) Mandataire: Coralis Harle

(57) **Abrégé**

La présente invention concerne un procédé et une installation pour l'obtention de pièces de viande (P3) qui présentent des formes et des poids cibles homogènes.

Ce procédé est caractérisé en ce qu'il comprend les étapes successives suivantes :
- une étape (B) de préparation de pièces de viande ayant une température supérieure à 0°C, qui présentent des poids cibles homogènes et des formes initiales hétérogènes,
- une étape (D) de tempérage desdites pièces de viande, pour les descendre jusqu'à une température comprise entre 0°C et -5°C, bornes exclues, depuis une température supérieure à 0°C, et
- une étape (E) de formage desdites pièces tempérées ayant une température comprise entre 0°C et -5°C, bornes exclues, de sorte à leur conférer ladite forme cible.

## Description

### DOMAINE TECHNIQUE AUQUEL SE RAPPORTE L'INVENTION

La présente invention concerne un procédé et une installation pour la production de pièces de viande, qui présentent des formes et des poids cibles homogènes.

### ARRIERE-PLAN TECHNOLOGIQUE

Dans le domaine de l'industrie alimentaire, il peut être intéressant de disposer de pièces de viande dont le poids et la forme soient homogènes.

De telles pièces de viande sont en particulier utiles pour « standardiser » les opérations ultérieures de traitement, par exemple de cuisson, de panure, etc., et aussi pour proposer aux clients et/ou aux consommateurs des produits ayant une même forme générale et approximativement le même poids.

Les procédés d'obtention de ces pièces comprennent généralement des étapes de congélation à coeur du produit.

Plus précisément, il est connu de congeler à coeur des blocs de viande, puis de les presser (toujours dans un état congelé) pour leur conférer leur forme finale.

De tels procédés sont par exemple décrits dans les documents US-3 753 398, US-2012/0288613 ou US-2003/0113422.

Mais le formage subi par ces pièces de viande congelées à coeur peut être source de détériorations/dégradations de leurs fibres musculaires qui conduisent à un produit final de moindre qualité.

Certaines viandes sont particulièrement sensibles à ce phénomène ; c'est notamment le cas de la viande de volaille.

Plus généralement, du fait des opérations de congélation à coeur préalables au formage, les procédés de formage actuels ne sont pas adaptés pour l'obtention de pièces de viande dans un état frais (notamment pour des questions de législation).

Il existe par conséquent un besoin d'une solution technique pour l'obtention de pièces de viande, aussi bien dans un état frais que dans un état surgelé, dont les caractéristiques qualitatives sont améliorées et qui présentent des formes et des poids cibles homogènes.

### OBJET DE L'INVENTION

La présente invention concerne un procédé et une installation pour l'obtention de telles pièces de viande.

Le procédé selon l'invention, pour l'obtention de pièces de viande qui présentent des formes et des poids cibles homogènes, comprend les étapes successives suivantes :
- une étape de préparation de pièces de viande ayant une température supérieure à 0°C, qui présentent des poids cibles homogènes et des formes initiales hétérogènes,
- une étape de tempérage desdites pièces de viande, pour les descendre jusqu'à une température de travail minimale comprise entre 0°C et -5°C, bornes exclues (de préférence entre 0°C et -3°C, bornes exclues, et de préférence encore entre -1°C et-2,8°C, bornes incluses), depuis une température supérieure à 0°C, et
- une étape de formage desdites pièces tempérées ayant toujours ladite température de travail comprise entre 0°C et -5°C, bornes exclues (de préférence entre 0°C et -3°C, bornes exclues, et de préférence encore entre -1°C et -2,8°C, bornes incluses), de sorte à leur conférer ladite forme cible.

Lors des étapes de tempérage et de formage, la température de travail, cible, pour les pièces de viande est alors avantageusement égale à la température de cristallisation de l'eau qu'elles contiennent (correspondant encore à leur température de congélation ou température de fusion), voire légèrement inférieure à cette dernière.

Par « légèrement inférieure », on entend avantageusement une température réduite d'au maximum 0,5°C par rapport à la température de cristallisation commençante de l'eau contenue dans l'aliment (c'est-à-dire encore une température réduite de 0,1°C, 0,2°C, 0,3°C, 0,4°C ou 0,5°C par rapport à la température de cristallisation commençante de l'eau contenue dans l'aliment).

Par « température minimale », on entend une température de travail ne descendant pas en-dessous de ladite température minimale, ou en d'autres termes, une température de travail choisie au-dessus de ladite température minimale.

Tout au long de ces étapes de tempérage et de formage, les pièces de viande ont une température relative basse, sans toutefois conduire à leur congélation à coeur.

Il a été constaté que ces températures de travail particulières sont intéressantes pour le formage des pièces de viande qui ne reprennent alors pas leur forme initiale à l'arrêt de la sollicitation, tout en préservant leurs caractéristiques qualitatives.

Ces températures permettent également de maîtriser et de limiter les pertes de poids par évaporation de l'eau du fait d'opérations de congélation, et de ce fait d'avoir des temps de passage (mise à température) inférieurs.

Cette solution technique permet l'obtention de pièces de viande, aussi bien dans un état frais que dans un état surgelé.

Avant l'étape de tempérage, le procédé comprend avantageusement une étape de préformage des pièces de viande préparées ayant une température supérieure à 0°C, de sorte à leur conférer une forme intermédiaire qui correspond approximativement à la forme cible.

Une telle étape de préformage offre de nombreux avantages, à savoir notamment :
- une régularité de la forme, en comparaison avec les techniques actuelles,
- un temps de tempérage plus facile à maitriser et une température plus précise, du fait d'une épaisseur plus régulière,
- un gain de productivité lors de l'étape de formage (plus les pièces sont calibrées, plus l'étape de formage est rapide),
- une diminution du risque de déstructuration du muscle, du fait d'une moindre amplitude de déformation,
- une réduction des chutes au formage,
- une amélioration de l'introduction dans le moule de formage du fait de la suppression des formes pointues ou longues,
- une limitation de la souillure des moules et une diminution du temps de nettoyage (hygiène améliorée).

Dans ce cadre, la forme de chaque pièce de viande est définie notamment par un contour latéral ; et l'étape de préformage est avantageusement ajustée de sorte que le contour de chaque pièce de viande préformée s'inscrit dans le contour des pièces de viande formées.

Lors de l'étape de préformage, chaque pièce de viande est avantageusement pressée dans un moule de préformage qui comporte une empreinte définissant la forme intermédiaire recherchée.

Encore dans ce cas, l'étape de préformage est avantageusement associée à une étape de formation d'une pellicule congelée sur une partie de la surface des pièces de viande préformées, cela de manière à figer leurs contours latéraux respectifs.

Par ailleurs, l'étape de préparation des pièces de viande comprend de préférence les opérations suivantes :
- une opération de désépaississement de morceaux de viande,
- une opération d'orientation desdits morceaux de viande,
- une opération de découpe des morceaux de viande pour l'obtention desdites pièces de viande à former, tenant compte du poids cible, et
- une opération d'injection et/ou de barattage desdites pièces de viande.

Selon encore une autre caractéristique, l'étape de formage des pièces de viande est effectuée par application d'une pression comprise entre 2 et 12 tonnes sur une pièce de viande.

La présente invention concerne également une installation pour l'obtention de pièces de viande qui présentent des formes et des poids cibles homogènes, laquelle installation comprend les postes successifs suivants :
- un poste de tempérage desdites pièces de viande, pour les descendre jusqu'à une température minimale de travail comprise entre 0°C et -5°C, bornes exclues (de préférence entre 0°C et -3°C, bornes exclues, et de préférence encore entre -1°C et-2,8°C, bornes incluses), depuis une température supérieure à 0°C, et
- un poste de formage desdits pièces tempérées, dont la température est ladite température de travail comprise entre 0°C et -5°C, bornes exclues (de préférence entre 0°C et -3°C, bornes exclues, et de préférence encore entre -1°C et -2,8°C, bornes incluses), de sorte à leur conférer ladite forme cible.

De préférence, l'installation est dépourvue, en amont du poste de formage, de moyens pour la congélation des pièces de viande.

De préférence, en amont du poste de tempérage, cette installation comporte encore un poste de préformage des pièces de viande fournies ayant une température supérieure à 0°C, de sorte à leur conférer une forme intermédiaire qui correspond approximativement à la forme cible.

Ce poste de préformage comprend avantageusement :
- des moules de préformage qui sont chacun adaptés pour recevoir une pièce de viande à préformer, et qui comportent chacun une empreinte définissant sa forme intermédiaire, et
- des moyens pour appliquer une pression sur chaque pièce de viande rapportée dans l'un desdits moule de préformage, de sorte que ladite pièce de viande épouse, au moins approximativement, l'empreinte associée.

Dans ce cadre, de préférence, le poste de formage comporte des moules de formage ; les moules de préformage et de formage comportent chacun une empreinte délimitée par une bordure latérale définissant le contour latéral des pièces rapportées, et la bordure latérale d'un moule de préformage s'inscrit avantageusement dans l'encombrement de la bordure latérale d'un moule de formage.

Encore selon l'invention, les moules de préformage comportent avantageusement un fond muni de moyens de congélation surfacique, qui sont agencés pour former une pellicule congelée sur une partie de la surface de la pièce de viande rapportée dans lesdits moules de préformage.

Dans ce cadre, les moules de préformage comportent avantageusement :
- un organe de moulage annulaire, comportant une surface supérieure, une surface inférieure et une empreinte traversante munie d'une ouverture supérieure et d'une ouverture inférieure, et
- un organe de fond, destiné à s'étendre en regard de l'ouverture inférieure dudit organe de moulage annulaire, muni desdits moyens de congélation surfacique adaptés à générer une pellicule congelée au niveau de la surface de la pièce de viande située en regard dudit organe de fond.

Les organes de moulage annulaires sont de préférence portés par des moyens de manoeuvre, pour leur cheminement entre deux positions :
- une position active dans laquelle l'ouverture inférieure de l'organe de moulage annulaire est obturée par l'organe de fond, pour générer la pellicule inférieure congelée sur la pièce de viande préformée, et
- une position inactive dans laquelle l'ouverture inférieure de l'organe de moulage annulaire est écartée par rapport audit organe de fond, pour l'extraction de la pièce de viande au travers de ladite ouverture inférieure.

Une telle installation comporte avantageusement une pluralité d'organes de moulage annulaires portés par les moyens de manoeuvre du type carrousel, et l'organe de fond est constitué par une table munie de moyens de congélation (pour lui conférer une température négative), appelée table de croûtage.

Dans ce cadre, de préférence, les moyens pour appliquer la pression sur la pièce de viande sont agencés pour exercer une pression au niveau de l'ouverture supérieure des organes de moulage annulaire en position active, et le poste de préformage comprend encore des moyens d'extraction adaptés pour exercer une poussée au niveau de l'ouverture supérieure des organes de moulage annulaires en position inactive, pour extraire les pièces de viande de leurs moules de préformage.

### DESCRIPTION DETAILLEE D'UN EXEMPLE DE REALISATION

La présente invention sera encore illustrée, sans être aucunement limitée, par la description suivante en relation avec les figures annexées dans lesquelles :
- la figure 1 est un schéma bloc illustrant les principales étapes successives du procédé selon l'invention ;
- les figures 2 à 4 représentent l'évolution du contour d'une pièce de viande au cours de procédé de formage conforme à la figure 1 ;
- la figure 5 illustre, de manière schématique et vue de dessus, une installation pour la mise en oeuvre du procédé selon l'invention ;
- la figure 6 est une vue de côté, isolée, d'une forme de réalisation possible du poste de préformage équipant l'installation selon la figure 5 ;
- la figure 7 représente schématiquement, vu de dessus, un moule destiné à équiper le poste de préformage ;
- la figure 8 représente également schématiquement, vu de dessus, un moule adapté à équiper le poste de formage ;
- la figure 9 est une courbe illustrant l'évolution de la température d'une pièce de viande, en fonction du temps, au cours du procédé selon l'invention.

Le procédé et l'installation selon l'invention sont adaptés pour l'obtention de pièces de viande qui présentent des formes et des poids homogènes.

Les pièces de viande obtenues sont avantageusement (i) dans un état frais ou (ii) dans un état surgelé individualisé (ou « IQF » pour « individual quick frozen » ou « surgélation rapide individuelle »).

Les différents aspects du procédé et de l'installation selon l'invention sont décrits ci-dessous, après les définitions générales de quelques termes techniques.

### Définitions générales

Le terme « viande » doit être compris dans sa portée générale, c'est-à-dire toute chair comestible d'un animal, y compris la chair de poisson.

Le mot viande désigne ainsi l'ensemble des aliments provenant d'animaux et comprenant des tissus musculaires.

Par « viande », on entend notamment :
- les viandes rouges : boeuf, cheval, canard ou mouton,
- les viandes blanches : porc, volailles (notamment poulet ou dinde), lapin ou veau,
- le poisson.

Par « pièce de viande », on entend avantageusement une pièce constituée d'un muscle entier.

Les pièces de viande obtenues dans le cadre de l'invention peuvent être dans un état « frais », c'est-à-dire qu'elles sont dans un état « non-congelé » et qu'elles n'ont pas subies une congélation à coeur.

Par « non-congelé », on entend avantageusement une pièce de viande dont la teneur en eau dans un état congelé (en pourcentage de la teneur totale en eau) est inférieure à 50%, c'est-à-dire encore inférieure à 40%, 30%, 20%, 10%, 5% ou 1%.

Ces pièces de viande « non-congelées » sont avantageusement maintenues, en permanence, à une température visant à prévenir une congélation à coeur.

De manière alternative, les pièces de viande obtenues dans le cadre de l'invention peuvent être dans un état « surgelé », en particulier un état surgelé dit « IQF » (pour « individual quick frozen » ou « surgélation rapide individuelle »).

Par « température » d'une pièce de viande, on entend en particulier la température à coeur de ce produit.

Par « congélation », on entend notamment toute technique qui consiste à abaisser la température du produit et à la maintenir en dessous de la température de cristallisation de l'eau qu'il contient (ou de la température de congélation de son eau).

Parmi les techniques de congélation, il existe en particulier les techniques de « surgélation », qui consiste à refroidir brutalement (quelques minutes à une heure) des aliments en les exposant intensément à des températures allant de -35°C à -196°C.

Grâce à ce dernier procédé, l'eau contenue dans les cellules se cristallise finement, limitant ainsi la destruction cellulaire.

Il existe plusieurs procédés de surgélation. On peut citer principalement : - la technique par contact, réservée aux aliments de faibles épaisseurs, est réalisée en introduisant un aliment entre deux plaques dans lesquelles circule un fluide à -35°C ; - la technique par air est réalisée en exposant le produit à un courant d'air froid à très basse température (jusqu'à -196 °C) ; - la technique par immersion, adaptée aux produits de formes irrégulières, qui consiste à immerger l'aliment dans un fluide à très basse température tel que l'azote liquide.

Cette opération de congélation permet de supprimer toute activité biologique (qui dépend de la présence d'eau sous forme liquide), voire chimique et enzymatique (pour les très basses températures).

La « température de cristallisation » représente la température, à une pression donnée (pression atmosphérique par convention), à laquelle l'eau du produit passe de l'état solide à l'état liquide (et réciproquement).

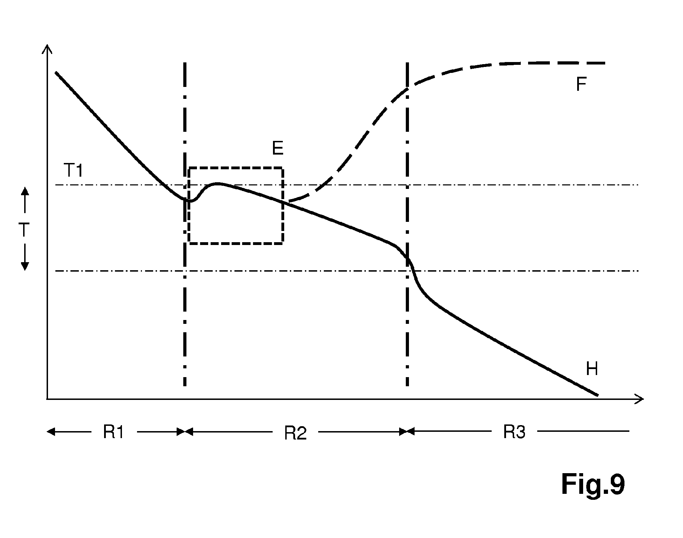

Sans être limité par une quelconque théorie, un processus de congélation d'un produit, soumis à une température environnante négative, comprend schématiquement trois stades successifs (représentés par la courbe H sur la figure 9 en trait continu) :
- un stade de pré-congélation R1, correspondant au refroidissement de la température initiale de l'eau jusqu'à la température de cristallisation T,
- un stade de cristallisation R2, caractérisé par un palier de température correspondant à la température de cristallisation T, au cours duquel il se produit une formation de cristaux de glace dans le produit, et
- un stade de refroidissement R3, pendant lequel la température du produit descend jusqu'à la température environnante négative et correspondant à une congélation à coeur.

Pour une pièce de viande, et sans être limité par une quelconque théorie, le palier de température précité évolue du fait de phénomènes de cryo-concentration (ou concentration en sel) comme illustré par le stade de cristallisation R2 de la figure 9.

La « température de cristallisation » ou « point de cristallisation » T d'une pièce de viande correspond ainsi, avantageusement, à une température dite de « cristallisation commençante » ou « congélation commençante » T1.

Cette température de cristallisation T peut être déterminée par la réalisation d'une courbe de descente de température, qui permet de visualiser un palier correspondant à « la chaleur latente » du produit (stade R2 de la courbe en trait continu H sur la figure 9).

Pour les pièces de viande, la température de cristallisation est classiquement inférieure à 0°C et supérieure à -3°C, plus généralement comprise entre -1°C et -2,8°C.

Plus généralement, la température de cristallisation peut être comprise entre 0°C et -5°C, bornes exclues, notamment en fonction de la présence de sel rapporté qui abaisse la température de cristallisation.

Dans ce contexte, avantageusement, la température des pièces de viande est descendue, au maximum, à une température égale à sa température de cristallisation (avantageusement sa température de cristallisation commençante T1), voire légèrement inférieure à cette dernière.

Par « légèrement inférieure », on entend notamment une température réduite d'au maximum 0,5°C par rapport à la température de cristallisation commençante de l'eau contenue dans l'aliment (c'est-à-dire encore une température réduite de 0,1°C, 0,2°C, 0,3°C, 0,4°C ou 0,5°C par rapport à la température de cristallisation commençante de l'eau contenue dans l'aliment).

Sans être limité par aucune théorie, à cette température particulière de travail, l'eau contenue dans la pièce de viande n'est pas cristallisée ou seulement partiellement cristallisée, sans conduire à une congélation à coeur.

Les pièces de viande obtenues conformément à la présente invention ont en plus des formes et des poids cibles « homogènes ».

Par « homogènes », on entend notamment des formes et des poids cibles identiques, ou au moins approximativement identiques.

La « forme » d'une pièce correspond à son aspect extérieur.

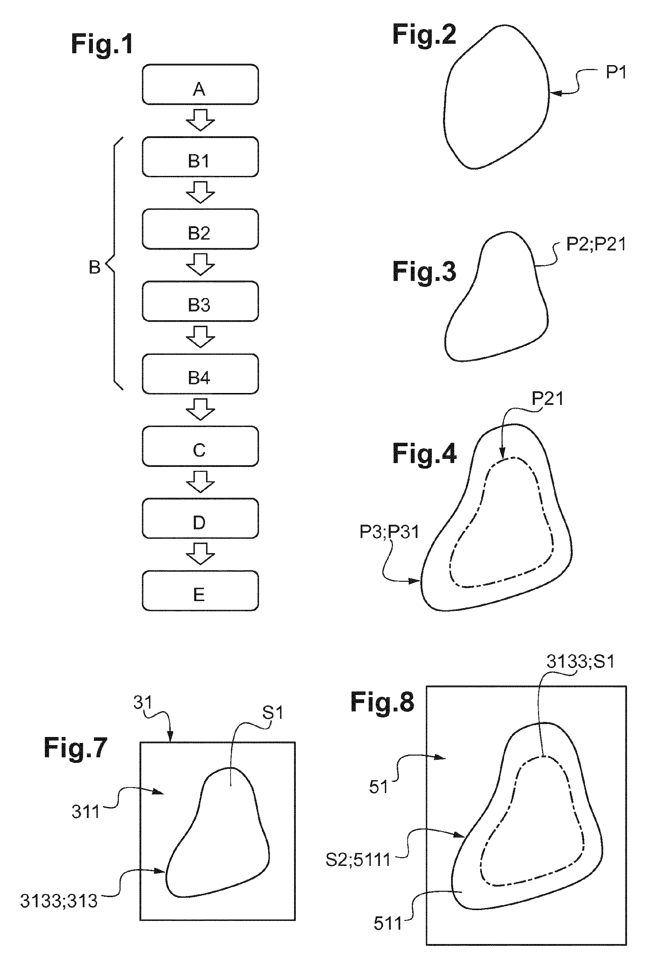

Cette notion englobe notamment son « contour latéral » tel qu'illustré schématiquement sur les figures 2 à 4, c'est-à-dire la bordure périphérique de la pièce de viande reposant sur un support plan et observée de dessus.

De manière générale, ce contour latéral correspond encore à la section maximale de la pièce de viande.

La forme de cette pièce de viande est encore définie par une hauteur, correspondant à une section qui est orientée perpendiculairement au support plan précité.

Les « formes cibles » correspondantes peuvent être du type « naturel », c'est-à-dire correspondant à une forme classiquement rencontrée dans le domaine des pièces de viande de consommation. Elles peuvent encore correspondre à toute autre forme souhaitée par l'industriel.

Ces différentes formes peuvent être « approximativement identiques », c'est-à-dire présenter quelques différences d'aspect, sans toutefois modifier leur aspect général.

Ces pièces de viande ont en plus un « poids cible » classiquement rencontré dans le domaine de la consommation, par exemple compris entre 40 et 150 g.

Elles peuvent avoir des poids « approximativement identiques », c'est-à-dire variant de 2 à 15 % par rapport à un poids cible.

### Procédé selon l'invention

Un mode de réalisation du procédé selon l'invention, pour l'obtention de pièces de viande « standardisées », fraiches ou surgelées, est décrit ci-dessous en relation avec le schéma bloc de la figure 1.

Le procédé correspondant commence par une étape A de réception de morceaux de viande (non représentés), qui ont une forme et un poids non homogènes (hétérogènes) les uns par rapport aux autres.

Ces morceaux de viande « bruts » sont par exemple détachés de l'ossature d'un animal.

Ces morceaux de viande font, dans un premier temps, l'objet d'une étape pour la préparation de pièces de viande P1 (figure 2) dont la température est supérieure à 0°C et qui présentent des poids homogènes (correspondant au poids cible) et des formes hétérogènes (avec chacune une forme propre).

Par « supérieure à 0°C », on entend en particulier une température comprise entre 0°C et 6°C.

Cette étape de préparation B comprend une succession d'opérations décrites ci-dessous en relation avec la figure 1.

Une première opération B1 consiste en un désépaississement du morceau de viande.

Cette opération de désépaississement B1 consiste à réduire l'épaisseur du morceau de viande si cette épaisseur est trop importante pour les étapes suivantes de préformage et de formage.

Ce réglage s'effectue par un réglage de la hauteur de coupe, de manière préréglée ou par l'intermédiaire d'un automate (piloté par exemple par une caméra).

Ces morceaux de viande désépaissis font ensuite l'objet d'une opération d'orientation B2, en vue de respecter au mieux le sens de la fibre lors de la coupe à suivre et de favoriser les extensions de fibres ultérieures.

Une opération de découpe B3 est ensuite mise en oeuvre, au cours de laquelle les morceaux de viande orientés sont découpés pour l'obtention des pièces de viande à former P1.

Cette opération de découpe B3 est en particulier ajustée de sorte que les différentes pièces de viande P1 obtenues aient un poids correspondant au poids cible précité.

Ces différentes pièces de viande à former P1 peuvent enfin subir une opération d'injection et/ou de barattage B4, de manière à détendre les fibres musculaires sans les abimer.

L'opération d'injection a pour principe de forcer la pénétration d'une saumure à coeur du produit et de réduire ainsi le temps nécessaire à l'homogénéisation. Le taux d'injection de la saumure est généralement compris entre 0 % et 30 % du poids du produit.

L'opération de barattage consiste à appliquer un attendrissage mécanique des pièces de viande, qui peut être utile pour attendrir la viande et améliorer la fixation de la saumure.

Les pièces de viande P1 ainsi obtenues ont ainsi des poids cibles homogènes, avec toutefois des formes initiales hétérogènes.

Suite à cette étape de préparation B, le procédé se poursuit de préférence par une étape C au cours de laquelle les pièces de viande sont préformées.

Il a été en effet constaté que des pièces préformées P2 (ayant subi une opération de préformage) sont notamment aptes à subir une opération finale de formage, avec une atteinte réduite de leurs fibres musculaires et sans phénomènes (ou tout au moins limitant les phénomènes) de fausse-coupe.

En pratique, l'étape de préformage C est appliquée sur les pièces de viande qui sont toujours à une température supérieure à 0°C.

Cette étape de préformage C a pour fonction de conférer, aux pièces de viande, une forme intermédiaire qui correspond approximativement à la forme cible ou tout au moins qui se rapproche de la forme cible.

Plus précisément, cette étape de préformage C est réalisée de sorte à obtenir des pièces de viande P2 dont le contour latéral P21 (figure 3 et trait discontinu de la figure 4) est destiné à s'inscrire dans le contour latéral P31 des pièces de viande formées P3 (trait plein sur la figure 4).

Le contour latéral P21 des pièces de viande préformées P2 définit ainsi une surface longitudinale qui est inférieure à la surface longitudinale définie par le contour latéral P31 des pièces de viande formées P3.

Par exemple, à titre indicatif, la surface longitudinale du contour latéral P21 des pièces de viande préformées P2 est réduit de 5% à 30% par rapport à la surface longitudinale du contour latéral P31 des pièces de viande formées P3.

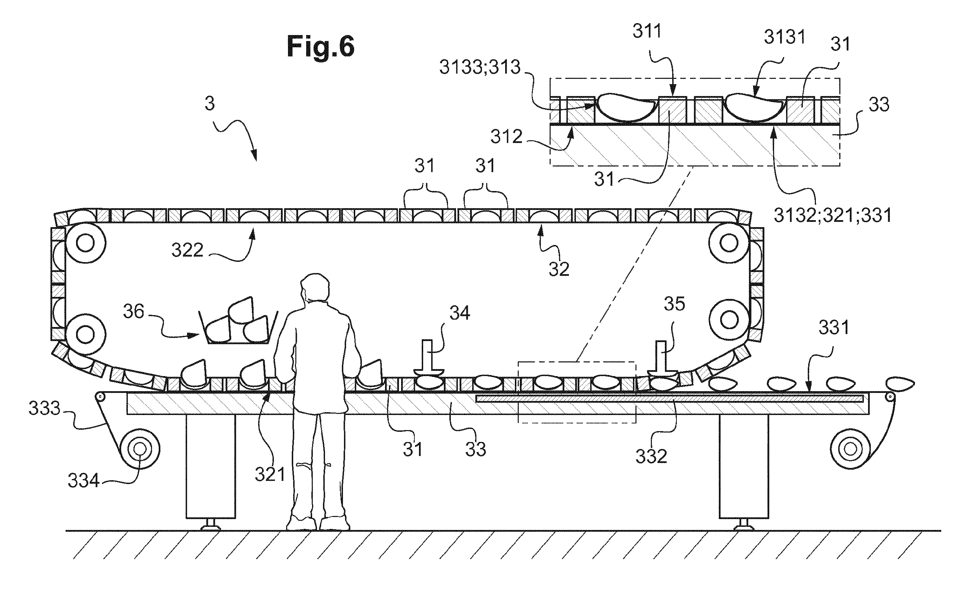

De manière générale, cette étape de préformage C peut être réalisée au moyen d'un moule dédié (moule de préformage), tel que décrit ci-après en relation avec les figures 6 et 7 ; elle peut également être effectuée manuellement, par un opérateur.

Le contour latéral P21 de ces pièces de viande préformées P2, en attente de formage, est avantageusement maintenu par la formation d'une pellicule congelée sur une partie de leur surface périphérique, en particulier une surface inférieure en appui sur un support plan et/ou une surface correspondant au contour latéral.

Une telle opération, dite de « croûtage », vise à obtenir une couche superficielle congelée qui est inférieure au millimètre, voire de quelques millimètres (par exemple de 2 mm), sur la pièce de viande préformée P2.

Cette opération de croûtage ne conduit ainsi aucunement à congeler à coeur le produit ; elle ne constitue pas une opération de congélation.

L'étape de préformage C conduit encore à réduire l'épaisseur de la pièce de viande préformée P2, avantageusement par une pression orientée dans le sens de son épaisseur.

Elle a ainsi pour intérêt de limiter l'épaisseur maximale des pièces de viande préformées P2, de manière à optimiser les étapes suivantes de tempérage et de formage.

Dans ce contexte, les étapes de réception A, de préparation B et de préformage C sont effectuées sur des pièces de viande P1, P2 ayant une température supérieure (ou égale) à 0°C. Ces pièces de viande P1, P2 ne subissent ainsi avantageusement aucune phase préalable de congélation à coeur.

Les pièces de viande préformées P2 sont ensuite soumises à une étape dite de « tempérage ».

Selon l'invention, cette étape de tempérage D consiste à descendre (ou à abaisser) la température des pièces de viande préformées P2 depuis une température supérieure à 0°C, cela jusqu'à une température de travail uniforme (minimale) qui est voisine de sa température de cristallisation T (correspondant au stade de pré-congélation R1 et au stade de cristallisation R2 de la figure 9), sans toutefois conduire à (ou passer par) une congélation à coeur (correspondant au stade de refroidissement R3 de la figure 9).

Il a été constaté que, de manière surprenante, la descente de la température des pièces de viande, depuis une température supérieure à 0°C et cela jusqu'à ladite température de travail (correspondant au stade de pré-congélation R1 et au stade de cristallisation R2 de la figure 9), constitue une démarche très intéressante et suffisante pour la mise en oeuvre de l'opération de formage suivante tout en préservant les caractéristiques qualitatives des pièces de viande formées.

Cette température de cristallisation T est, de manière générale, avantageusement comprise entre 0°C et -5°C, bornes exclues, de préférence entre 0°C et -3°C, bornes exclues, de préférence encore comprise entre -1°C et -2,8°C bornes incluses, de préférence encore entre -1,5°C et -2,5°C bornes incluses.

Cette étape de tempérage sera notamment adaptée en fonction du taux de sel de la pièce de viande à former.

De préférence, la température de travail recherchée est légèrement inférieure à la température de cristallisation commençante T1 des pièces de viande préformées P2, par exemple inférieure de 0,5°C par rapport à la température de cristallisation commençante T1.

Sans être limitée par aucune théorie, durant cette étape de tempérage D, la teneur en eau congelée des pièces de viande P2, par rapport à leur teneur totale en eau, est maintenue au-dessous de 30% à 50%.

Les pièces préformées/tempérées P2 (sensiblement refroidies mais non congelées à coeur) peuvent alors être soumises à une étape de formage E, de sorte à obtenir les pièces de viande finales P3 ayant leur forme cible homogène (figure 4).

Lors de cette étape de formage E, les pièces de viande présentent toujours une température issue de l'étape de tempérage D, pour rappel une température comprise entre 0°C et -5°C bornes exclues, et de préférence entre -1°C et -2,8°C bornes incluses.

Comme précisé ci-dessus, cette température des pièces de viande est voisine de leur température de cristallisation (avantageusement de leur température de cristallisation commençante), de préférence légèrement inférieure à cette dernière, sans toutefois conduire à leur congélation à coeur.

Selon l'invention, cette gamme de température particulière offre l'avantage de préserver une certaine souplesse au produit, tout en garantissant un certain maintien de la forme à l'arrêt de la sollicitation.

Cette température permet en plus un formage sans atteinte des fibres musculaires, ce qui garantit une bonne qualité des fibres après extension.

L'étape de formage E s'effectue alors avantageusement par application d'une pression comprise entre 2 et 12 tonnes sur une pièce de viande.

Une telle pression est inférieure à celle classiquement mise en oeuvre pour le formage de pièces de viande congelées (nécessitant généralement une pression comprise entre 8 et 30 tonnes).

Cette étape de formage E conduit avantageusement à un accroissement de 5% à 30% de la surface longitudinale des pièces.

En outre, cette étape de formage E est avantageusement mise en oeuvre dans un état correspondant au début du stade de cristallisation R2 (comme illustré sur la figure 9), avantageusement dans la première moitié de ce stade de cristallisation R2.

Sans être limitée par aucune théorie, durant cette étape de formage E, la teneur en eau congelée des pièces de viande P2, par rapport à leur teneur totale en eau, est ainsi alors maintenue au-dessous de 30% à 50%.

A l'issue de cette étape de formage E, le procédé selon l'invention aboutit à des pièces de viande dans un état frais, qui présentent des formes et des poids cibles homogènes.

De tels produits peuvent ensuite subir les traitements classiques suivants :
(i) pour un état « frais », on ajuste la température des pièces de viande à une température comprise entre 0°C et 4°C, par une étape de réfrigération (courbe F en trait discontinu sur la figure 9), ou
(ii) pour un état « surgelé », on refroidit brutalement les aliments en les exposant intensément à des températures très faibles (par exemple allant de -35°C à -196°C), par une étape de surgélation (courbe H en trait continu sur la figure 9).

### Installation selon l'invention

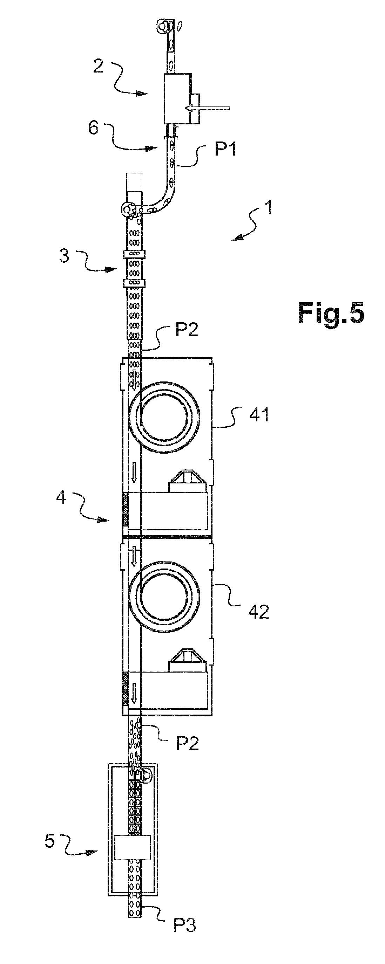

Un mode de réalisation de l'installation selon l'invention, pour l'obtention de pièces « standardisées », est décrit ci-dessous en relation avec les figures 5 à 8.

Cette installation 1 comprend plusieurs postes successifs, agencés en série, pour la mise en oeuvre des différentes étapes précitées du procédé selon l'invention.

De manière générale, les termes « amont » et « aval » sont utilisés en référence au sens de cheminement des pièces de viande au sein de l'installation 1.

Cette installation 1 selon l'invention comprend, tel qu'illustré schématiquement sur la figure 5, les postes successifs suivants de l'amont vers l'aval :
- un poste de préparation 2, pour la fourniture des pièces de viande à former P1 selon l'étape de préparation B précitée,
- un poste de préformage 3, pour la mise en oeuvre de l'étape C correspondante, pour conférer la forme intermédiaire aux pièces de viande,
- un poste de tempérage 4, pour la mise en oeuvre de l'étape de tempérage D précitée sur les pièces préformées P2, et
- un poste de formage 5, pour la mise en oeuvre de l'étape de formage E précitée sur les pièces préformées/tempérées P2, qui permet d'obtenir les pièces de viande fraiches et « standardisées » recherchées.

Cette installation 1 est dépourvue, en amont du poste de formage 5, de moyens pour la congélation à coeur des pièces de viande.

Un ensemble de moyens de convoyage 6, notamment du type tapis de convoyage et moules de préformage/formage, assure le cheminement des morceaux et pièces de viande au sein des différents postes 2 à 5 de cette installation 1, de l'amont vers l'aval.

Le poste de préparation 2 comprend différents dispositifs classiques (non représentés), à savoir :
- un dispositif de désépaississement, du type trancheur horizontal, pour la mise en oeuvre de l'opération B1 correspondante,
- un dispositif d'orientation des morceaux de viande, pour la mise en oeuvre de l'opération d'orientation B2 précitée,
- un dispositif de découpe des morceaux de viande pour l'obtention des pièces de viande à former, tenant compte du poids cible, selon l'opération de découpe B3 correspondante, et
- un dispositif d'injection et/ou de barattage des pièces de viande, pour la mise en oeuvre de l'opération B4 associée.

En particulier, le dispositif de découpe consiste par exemple en une trancheuse automatisée qui est pilotée par des moyens de pesée et de vision. De manière alternative, cette coupe peut être réalisée manuellement.

Le barattage, dit encore malaxage, est par exemple réalisé au moyen d'un malaxeur dont les dimensions et le type de pale (centrale, hélicoïdale ou latérale) sont adaptés à façon.

L'injection est par exemple réalisée à l'aide d'un injecteur dont le nombre et le type d'aiguilles (diamètre, nombre de trous) varient d'un modèle à l'autre.

A la sortie de ce poste de préparation 2, les pièces de viande P1 ont une température supérieure à 0°C ; et elles présentent des poids homogènes (correspondant au poids cible), tout en ayant des formes hétérogènes (avec chacune une forme propre).

Le poste de préformage 3, illustré en détails sur la figure 6, comprend :
- une pluralité d'organes de moulage annulaires 31 qui sont destinés chacun à recevoir une pièce de viande P1 à préformer, et qui sont portés par des moyens de manoeuvre 32 du type carrousel, et
- une table de croûtage 33 horizontale, apte et destinée à produire une pellicule de surface congelée sur chacune des pièces de viande positionnées dans les organes de moulage 31.

Chaque organe de moulage annulaire 31 est destiné à former, en combinaison avec la table de croûtage 33, un moule de préformage.

Chacun des organes de moulage annulaire 31 comporte - une surface supérieure annulaire 311, - une surface inférieure annulaire 312 et - une empreinte traversante 313 pour participer à définir la forme intermédiaire de la pièce de viande en présence.

L'empreinte traversante 313 est munie d'une ouverture supérieure 3131, débouchant au niveau de la surface supérieure 311, et d'une ouverture inférieure 3132, débouchant au niveau de la surface inférieure 312.

Cette empreinte traversante 313 est délimitée encore par une bordure latérale 3133 (figures 6 et 7), qui est destinée à définir le contour latéral P21 des pièces de viande préformées P2.

Tel que détaillé ci-après en relation avec la figure 8, la bordure latérale 3133 de l'empreinte 313 est ajustée de sorte à s'inscrire dans la bordure latérale de l'empreinte d'un moule de formage équipant le poste de formage 5.

Cette bordure latérale 3133 de l'empreinte 313 définit encore une surface S1 qui est inférieure à la surface S2 définie par la bordure latérale de l'empreinte du moule de formage.

Les moyens de manoeuvre 32, de type carrousel, consistent ici en une bande sans fin dont le cheminement est guidé dans un plan vertical.

Ces moyens de manoeuvre 32 sont agencés de sorte que le brin aller 321 chemine horizontalement le long de la table de croûtage 33, dans un sens amont vers aval ; le brin retour 322 est quant à lui destiné à cheminer au-dessus et à distance de la table de croûtage 33, dans un sens aval vers amont.

Les organes de moulage annulaires 31 cheminent ainsi entre deux positions :
- une position active, correspondant au brin aller 321, dans laquelle l'ouverture inférieure 3132 de l'organe de moulage annulaire 31 est obturée par une face supérieure 331 de la table de croûtage 33, et
- une position inactive, correspondant au brin retour 322, dans laquelle l'ouverture inférieure 3132 de l'organe de moulage annulaire 31 est écartée par rapport à la face supérieure 331 de la table de croûtage 33, pour permettre l'extraction de la pièce de viande préformée P2 au travers de cette ouverture inférieure 3132.

Les organes de moulage annulaires 31, en position active, sont destinés à recevoir chacun une pièce de viande, pour leur préformage et leur cheminement dans le sens amont vers aval.

La table de croûtage 33 est destinée à générer la pellicule inférieure congelée sur la partie de la pièce de viande préformée P2 qui s'étend au niveau de l'ouverture inférieure 3132 de l'empreinte 313 de l'organe de moulage annulaire 31 en position active.

La face supérieure 331 de la table de croûtage 33 constitue un organe de fond pour les organes de moulage annulaires 31 en position active.

Cette table de croûtage 33 intègre des moyens de congélation surfaciques 332 pour la réfrigération, à très basse température, de sa surface supérieure 331.

Ces moyens de congélation 332 s'étendent en particulier au niveau d'une partie aval de cette face supérieure 331.

La température de la face supérieure 331 de la table de croûtage 33 est ainsi avantageusement réduite entre -18°C et -30°C.

La face supérieure 331 est ici avantageusement recouverte par un film alimentaire 333 qui chemine en translation, de l'amont vers l'aval, par l'intermédiaire de moyens de manoeuvre appropriés 334 (tels que des tambours motorisés).

La vitesse de ce film alimentaire 333 est avantageusement identique à celle des organes de moulage annulaires 31.

Ce film alimentaire sert à éviter que la viande ne colle sur la surface supérieure 331 de la table de croûtage 33.

Des moyens de réfrigération peuvent encore être prévus pour le refroidissement, à très basse température, des organes de moulage annulaires 31 de sorte à générer également une pellicule sur la surface de la pièce de viande en regard de la bordure latérale 3133 de l'empreinte 313.

En amont des moyens de congélation surfaciques 332, le poste de préformage 3 comporte encore des moyens 34 pour appliquer une pression sur chaque pièce de viande P1 rapportée dans l'un des organes de moulage annulaires 31 en position active.

Ces moyens de pression 34 sont adaptés pour venir appliquer une pression sur le dessus de la pièce de viande rapportée dans l'organe de moulage annulaire 31, de sorte que cette dernière épouse au plus près l'empreinte 313 associée et vienne bien s'appuyer sur la table de croûtage 33 au travers de l'ouverture inférieure 3132.

Ces moyens de pression 34 consistent par exemple en un vérin muni d'une tête adaptée pour donner sa forme à la surface supérieure de la pièce de viande.

Ce vérin est agencé pour exercer une pression au niveau de l'ouverture supérieure 3131 des organes de moulage annulaires 31 en position active, selon une direction perpendiculaire à la face supérieure 331 de la table de croûtage 33.

Ce poste de préformage 3 comporte encore des moyens 35 pour l'extraction de chaque pièce de viande préformée P2 et « croutée », au travers de l'ouverture inférieure 3132 des organes de moulage 31.

Les moyens d'extraction 35 consistent là encore en un ou des vérins (avec embout) qui sont également adaptés pour exercer une poussée au niveau de l'ouverture supérieure 3131 des organes de moulage annulaires 31, selon une direction perpendiculaire à la face supérieure 331 de la table de croûtage 33.

Ces moyens d'extraction 35 sont avantageusement positionnés au niveau de la zone de transition entre la position active et la position inactive des organes de moulage annulaires 31 (correspondant encore au passage entre le brin aller 321 et le brin retour 322), ou encore à la zone dans laquelle les organes de moulage annulaires 31 se séparent de la table de croûtage 33.

Le poste de préformage 3 comporte encore ici un bac de stockage 36, disposé en amont des moyens de pression 34, dans lequel un opérateur pioche les pièces de viande et les dispose dans les organes de moulage annulaires 31 en position active, au travers de leurs ouvertures supérieures 3131 respectives.

Cette opération manuelle pourrait être remplacée par des moyens mécaniques automatiques de préhension et de déposer des pièces de viande dans les différents organes de moulage annulaires 31 en position active.

Le poste de tempérage 4 comprend ici deux dispositifs implantés en série, à savoir un surgélateur 41 et un stabilisateur 42.

Selon l'invention, ce poste de tempérage 4 est ajusté et réglé de sorte que la température des pièces de viande préformées P2 soit descendue jusqu'à une température uniforme qui est voisine de sa température de cristallisation, sans toutefois conduire à leur congélation à coeur, en vue du formage à suivre.

Comme précisé ci-dessus, cette température de cristallisation est, de manière générale, avantageusement comprise entre 0°C et -5°C, bornes exclues, de préférence entre 0°C et -3°C, bornes exclues, de préférence encore comprise entre -1°C et -2,8°C bornes incluses.

Pour cela, le surgélateur 41 permet d'amener la température de la pièce de viande préformée P2 jusqu'à cette température cible.

Le stabilisateur 42 a quant à lui pour fonction de rendre homogène la température de l'ensemble de la pièce de viande préformée P2, tenant compte de la température cible.

Le poste de formage 5 comprend un ensemble de moules de formage 51, dont l'un d'entre eux est représenté très schématiquement sur la figure 8.

Le moule de formage 51 correspondant comporte une empreinte 511 destinée à recevoir une pièce de viande tempérée/préformée P2 et à définir la forme cible de la pièce de viande formée P3.

Cette empreinte 511 est délimitée notamment par une bordure latérale 5111 qui est destinée à définir le contour latéral P31 de la pièce P3 une fois formée et qui définit une surface longitudinale S2.

La surface S1 définie par la bordure latérale 3133 du moule de préformage 31 est inférieure et s'inscrit dans la surface S2 définie par la bordure latérale 5111 du moule de formage 51.

Par exemple, la surface S1 du moule de préformage 31 est inférieure de 5% à 30% par rapport à la surface S2 du moule de formage 51.

De ce fait, les pièces préformées/tempérées P2 s'intègrent au mieux dans l'empreinte 511 des moules de formage 51.

Le poste de formage 2, classique en soi, comporte encore :
- des moyens (non représentés) pour appliquer une pression sur chaque pièce de viande P2 rapportée dans l'un des moules de formage 51, de sorte que chaque pièce de viande épouse au mieux l'empreinte 511 associée, et
- des moyens (non représentés) pour l'extraction de chaque pièce de viande P3 une fois formée.

Au sein de ce poste de formage 5, la température des pièces de viande est identique, ou au moins approximativement identique, à celle issue du poste de tempérage 4.

Les moyens de pression consistent par exemple en un vérin muni d'une tête adaptée pour donner sa forme finale à la surface supérieure de la pièce de viande.

La pression de formage appliquée par les moyens de pression est avantageusement ajustée entre 2 et 12 tonnes sur une pièce de viande, tel que décrit précédemment.

A l'issue de ce poste de formage 5, les pièces de viande P3 sont dans un état frais, et elles présentent des formes et des poids cibles homogènes.

En aval de ce poste de formage 5, on peut encore implanter un poste de traitement thermique qui est adapté en fonction de l'état final recherché :
(i) un poste de réfrigération, pour l'obtention de pièces de viande à l'état frais dont la température est comprise entre 0°C et 4°C, ou
(ii) un poste de surgélation, pour l'obtention de pièces de viande dans un état surgelé « IQF » dont la température est inférieure à la température de cristallisation (par exemple -18°C).

Il est possible d'implanter encore un poste de conditionnement, pour l'emballage des pièces de viande obtenues.

De manière générale, le procédé et l'installation de l'invention permettent ainsi le formage de pièces de viande à l'état frais, sans les amener dans un état congelé à coeur.

Du fait des opérations successives préparatoires détaillées ci-dessus, les pièces de viande ainsi obtenues ont l'intérêt de présenter des fibres musculaires particulièrement bien préservées, en particulier par rapport aux procédés de formage habituels s'effectuant sur des pièces de viande congelées à coeur.

## Revendications

1. Procédé pour l'obtention de pièces de viande (P3) qui présentent des formes et des poids cibles homogènes, lequel procédé est **caractérisé en ce qu'**il comprend les étapes successives suivantes :
- une étape (B) de préparation de pièces de viande (P1) ayant une température supérieure à 0°C, qui présentent des poids cibles homogènes et des formes initiales hétérogènes,
- une étape (D) de tempérage desdites pièces de viande, pour les descendre jusqu'à une température minimale comprise entre 0°C et -5°C, bornes exclues, depuis une température supérieure à 0°C, et
- une étape (E) de formage desdites pièces tempérées (P3) ayant une température comprise entre 0°C et -5°C, bornes exclues, de sorte à leur conférer ladite forme cible.

2. Procédé selon la revendication 1, **caractérisé en ce que** l'étape de tempérage (D) des pièces de viande est ajustée pour les amener jusqu'à une température comprise entre -1°C et -2,8°C, bornes incluses, et
**en ce que** l'étape de formage (E) est appliquée sur lesdits pièces tempérées dont la température est comprise entre -1°C et -2,8°C, bornes incluses.

3. Procédé selon l'une quelconque des revendications 1 ou 2, **caractérisé en ce que**, avant l'étape de tempérage (D), le procédé comprend une étape de préformage (C) des pièces de viande préparées (P1) ayant une température supérieure à 0°C, de sorte à leur conférer une forme intermédiaire qui correspond approximativement à la forme cible.

4. Procédé selon la revendication 3, **caractérisé en ce que** la forme de chaque pièce de viande est définie notamment par un contour latéral (P21, P31), et **en ce que** l'étape de préformage (C) est ajustée de sorte que le contour (P21) de chaque pièce de viande préformée (P2) s'inscrit dans l'encombrement du contour (P31) des pièces de viande formées (P3).

5. Procédé selon l'une quelconque des revendications 3 ou 4, **caractérisé en ce que**, lors de l'étape de préformage (C), chaque pièce de viande (P1) est pressée dans un moule de préformage (31, 33) comportant une empreinte (313) définissant la forme intermédiaire recherchée.

6. Procédé selon l'une quelconque des revendications 3 à 5, **caractérisé en ce que** l'étape de préformage (C) est associée à une étape de formation d'une pellicule congelée sur une partie de la surface des pièces de viande préformées (P2), cela de manière à figer leurs contours latéraux (P21) respectifs.

7. Procédé selon l'une quelconque des revendications 1 à 6, **caractérisé en ce que** l'étape de formage (E) est effectuée par application d'une pression comprise entre 2 et 12 tonnes sur une pièce de viande.

8. Installation pour l'obtention de pièces de viande (P3) qui présentent des formes et des poids cibles homogènes, laquelle installation (1) est **caractérisée en ce qu'**elle comprend les postes successifs suivants :
- un poste de tempérage (4) desdites pièces de viande (P2), pour les descendre jusqu'à une température minimale comprise entre 0°C et -5°C, bornes exclues, depuis une température supérieure à 0°C, et
- un poste de formage (5) desdits pièces tempérées (P2), dont la température est comprise entre 0°C et -5°C, bornes exclues, de sorte à leur conférer ladite forme cible,

9. Installation selon la revendication 8, **caractérisée en ce qu'**elle comprend, en amont du poste de tempérage (4), un poste de préformage (3) des pièces de viande fournies (P1) ayant une température supérieure à 0°C, de sorte à leur conférer une forme intermédiaire qui correspond approximativement à la forme cible.

10. Installation selon la revendication 9, **caractérisée en ce que** le poste de préformage (3) comprend :
- des moules de préformage (31, 33) qui sont chacun adaptés pour recevoir une pièce de viande (P1) à préformer, et qui comportent chacun une empreinte (313) définissant sa forme intermédiaire, et
- des moyens (34) pour appliquer une pression sur chaque pièce de viande (P1) rapportée dans l'un desdits moules de préformage (31, 33), de sorte que ladite pièce de viande (P1) épouse, au moins approximativement, l'empreinte (313) associée.

11. Installation selon la revendication 10, **caractérisée en ce que** le poste de formage (5) comporte des moules de formage (51),
**en ce que** les moules de préformage (31, 33) et de formage (51) comportent chacun une empreinte (313, 511) délimitée par une bordure latérale (3133, 5111) définissant le contour latéral (P21, P31) des pièces rapportées (P21, P31), et
**en ce que** la bordure latérale (3133) d'un moule de préformage (31) s'inscrit dans l'encombrement de la bordure latérale (5111) d'un moule de formage (51).

12. Installation selon l'une quelconque des revendications 10 ou 11, **caractérisée en ce que** les moules de préformage (31, 33) comportent un fond (331) muni de moyens de congélation surfacique (332), qui sont agencés pour former une pellicule congelée sur une partie de la surface de la pièce de viande (P2) rapportée dans lesdits moules de préformage (31, 33).

13. Installation selon la revendication 12, **caractérisée en ce que** les moules de préformage (31, 33) comportent :
- un organe de moulage annulaire (31), comportant une surface supérieure (311), une surface inférieure (312) et une empreinte traversante (313) munie d'une ouverture supérieure (3131) et d'une ouverture inférieure (3132), et
- un organe de fond (33), destiné à s'étendre en regard de l'ouverture inférieure (3132) dudit organe de moulage annulaire (31), muni des moyens de congélation surfacique (332) adaptés à générer une pellicule congelée au niveau de la surface de la pièce de viande (P2) située en regard dudit organe de fond (33).

14. Installation selon la revendication 13, **caractérisée en ce que** les organes de moulage annulaires (31) sont portés par des moyens de manoeuvre (32), pour leur cheminement entre deux positions :
- une position active dans laquelle l'ouverture inférieure (3132) de l'organe de moulage annulaire (31) est obturée par l'organe de fond (33), pour générer la pellicule inférieure congelée sur la pièce de viande (P2) préformée, et
- une position inactive dans laquelle l'ouverture inférieure (3132) de l'organe de moulage annulaire (31) est écartée par rapport audit organe de fond (33), pour l'extraction de la pièce de viande (P2) au travers de ladite ouverture inférieure (3132).

15. Installation selon la revendication 14, **caractérisée en ce qu'**elle comporte une pluralité d'organes de moulage annulaires (31) portés par les moyens de manoeuvre (32) du type carrousel, et **en ce que** l'organe de fond (33) est constitué par une table munie de moyens de congélation (332).
